# EUROPEAN PATENT APPLICATION

(11) **EP 4 685 360 A1**
(43) Date of publication of application: **28.01.2026**
(21) Application number: 25191018.8
(22) Date of filing: 22.07.2025
(51) Int. Cl.: F16B 37/04

(54) **CAGE NUT ASSEMBLY INCLUDING NUT ANNULAR FLANGE CAPTURING CAGE AND METHOD OF MANUFACTURING THE SAME**

(30) Priority: 26.07.2024 US 202418785784
(71) Applicant: Newfrey LLC, New Britain, CT 06053 (US)
(72) Inventor: Safry, Oday Amer, Farmington Hills, MI 48334 (US); Jacobs, Terry G., Portland, IN 47371 (US); Clor, Leo R., Huntington, IN 46750 (US)
(74) Representative: Witte, Weller & Partner Patentanwälte mbB

(57) **Abstract**

A cage nut assembly (10) is disclosed that includes a cage (14) and a nut (12). The cage includes a plate (32) having a hole, sidewalls (34) extending from opposite sides of the plate, and an open bottom extending between bottom edges of the sidewalls. The nut includes a base (24), a neck, and a flange (26). The neck extends through the hole in the cage. The flange and the base of the nut capture the plate of the cage therebetween to secure the nut within the cage. A method of making such a cage nut assembly is also disclosed.

## Description

### FIELD

The present disclosure relates to a cage nut assembly including a nut having an annular flange capturing a cage, and a method of making such a cage nut assembly.

### BACKGROUND

The background description provided here is for the purpose of generally presenting the context of the disclosure. Work of the presently named inventors, to the extent it is described in this background section, as well as aspects of the description that may not otherwise qualify as prior art at the time of filing, are neither expressly nor impliedly admitted as prior art against the present disclosure.

Cage nut assemblies include a cage configured to be secured to an object and a nut that is captured within the cage and configured to receive a threaded stud (e.g., a bolt). Typically, the nut is captured within the cage by deforming the cage around the nut or attaching the nut to the cage using adhesive. In an example of the former, referred to as a closed box cage nut, the nut includes a rectangular flange and a cylindrical neck having a threaded hole therein, and the cage includes a rectangular plate and a pair of tabs that extends from opposite longitudinal edges of the plate. The flange of the nut is placed onto a bottom surface formed by the plate of the cage, and then the tabs of the cage are bent around the flange so that the nut is captured between the tabs and the plate.

The bottom surface of the cage has a hole so that, if a threaded stud is tightened into the threaded hole in the nut and extends through the threaded hole, the bottom surface of the cage does not prevent further tightening of the threaded stud. The hole in the bottom surface is oversized relative to the diameter of the threaded stud to allow for positional tolerances of the threaded stud. The oversized hole may lead to a loss of support of the nut bearing surface (i.e., the surface of the nut supported by the plate of the cage), which in turn may cause the nut flange to bow under high loads.

To avoid these issues, a four-piece cage nut assembly has been developed. The assembly includes a cage, a nut, a bushing, and a spacer. The cage has a pair of sidewalls that are connected to one another to form a channel with open ends and an open bottom. The bushing has a bowl shape with a flange at the top thereof and a bulge at the bottom thereof. The bulge in the bushing is slid into the channel via one of its open ends and subsequently captured within the channel. The bushing receives the nut, and the spacer fits between a flange on the nut and the flange on the bushing. The cage and the nut are made of metal. The bushing and the spacer are made of plastic.

Since the cage has an open bottom, the cage allows for full contact between the nut bearing surface and an object to which the cage is secured. However, the assembly requires complex and expensive assembly. In addition, the plastic spacer tends to break and become loose after a threaded stud is tightened into the nut, which requires that an assembler search for the spacer and discard it.

Therefore, a need exists for a cage nut assembly with an open bottom that is simple and inexpensive to assemble and does not have a component that may break and become loose during or after assembly.

### SUMMARY

An example of a cage nut assembly according to the present disclosure includes a cage and a nut. The cage includes a plate having a hole, sidewalls extending from opposite sides of the plate, and an open bottom extending between bottom edges of the sidewalls. The nut includes a base, a neck, and a flange. The neck extends through the hole in the cage. The flange and the base of the nut capture the plate of the cage therebetween to secure the nut within the cage.

As used herein, the term capture means to hold or contain an object and may include allowing limited movement of the object. That is, in certain embodiments, a limited relative movement between the cage and the nut may be allowed when the plate of the cage is captured between the flange and the base of the nut.

In one aspect, the neck is cylindrical and the flange is annular.

In one aspect, the nut has a T-shaped cross section.

In one aspect, the nut has a threaded bore that extends through the neck and the base.

In one aspect, opposite ends of the threaded bore in the nut are countersunk.

In one aspect, an inner diameter of the hole in the plate is greater than an outer diameter of the neck, yielding a gap between the nut and the cage.

In one aspect, the neck has a first thickness, and the flange has a second thickness that is less than the first thickness of the neck.

In one aspect, each of the sidewalls has a pair of feet projecting from opposite longitudinal ends thereof.

In one aspect, the cage and the nut are made of carbon steel.

In one aspect, the cage nut assembly consists of the cage and the nut.

An example of a method of making a cage nut assembly according to the present disclosure includes inserting a flange of a nut through a hole in a plate of a cage and deforming the flange and thereby capturing the plate of the cage between the flange of the nut and a base of the nut.

In one aspect, the method further includes supporting the nut using an anvil and deforming the flange using a punch.

In one aspect, the cage includes a pair of sidewalls extending from opposite sides of the plate, and the method further includes positioning the base of the nut between the sidewalls of the cage when deforming the flange.

In one aspect, deforming the flange includes rolling the flange over.

In one aspect, the flange has a cylindrical shape before the flange is deformed, and the flange has the shape of a disk with a hole in its center after the flange is deformed.

In one aspect, the method further includes securing the nut to the cage without deforming the cage or using adhesive.

In one aspect, the nut includes a neck connecting the flange of the nut to the base of the nut, and the method further includes positioning the neck within the hole when deforming the flange.

In one aspect, the neck has a cylindrical shape, and the method further includes deforming the flange includes bending the flange radially outward without deforming the neck.

In one aspect, the neck is cylindrical and, before the flange is deformed, the flange extends axially from an axial end of the neck so that the neck and the flange collectively form a cylindrical body, and after the flange is deformed, the flange extends radially outward from the cylindrical neck and has an annular shape.

In one aspect, the method further includes forming the neck to have a first thickness and forming the flange to have a second thickness that is less than the first thickness.

Further areas of applicability of the present disclosure will become apparent from the detailed description, the claims and the drawings. The detailed description and specific examples are intended for purposes of illustration only and are not intended to limit the scope of the disclosure.

### BRIEF DESCRIPTION OF THE DRAWINGS

The present disclosure will become more fully understood from the detailed description and the accompanying drawings, wherein:
FIG. 1 is a perspective view of a cage nut assembly according to the principles of the present disclosure;
FIG. 2 is a side view of the cage nut assembly of FIG. 1;
FIG. 3 is a section view of the cage nut assembly of FIG. 1 taken along a line 3-3 shown in FIG. 1;
FIG. 4 is a section view of the cage nut assembly of FIG. 1 taken along a line 4-4 shown in FIG. 1; and
FIGS. 5 and 6 are section views illustrating an example process of forming the cage nut assembly of FIG. 1 according to the principles of the present disclosure.

In the drawings, reference numbers may be reused to identify similar and/or identical elements.

### DETAILED DESCRIPTION

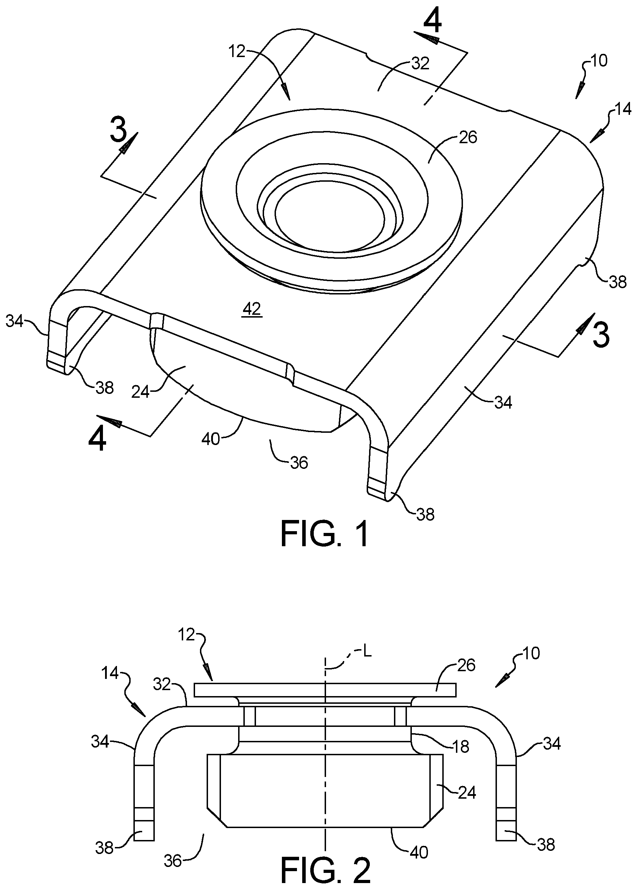

Referring to FIGS. 1 through 4, a cage nut assembly 10 has an open bottom 36 and is simple and inexpensive to assemble relative to prior art cage nut assemblies. In addition, the cage nut assembly 10 does not have a component that may break and become loose during or after assembly. The cage nut assembly 10 includes a nut 12 and a cage 14.

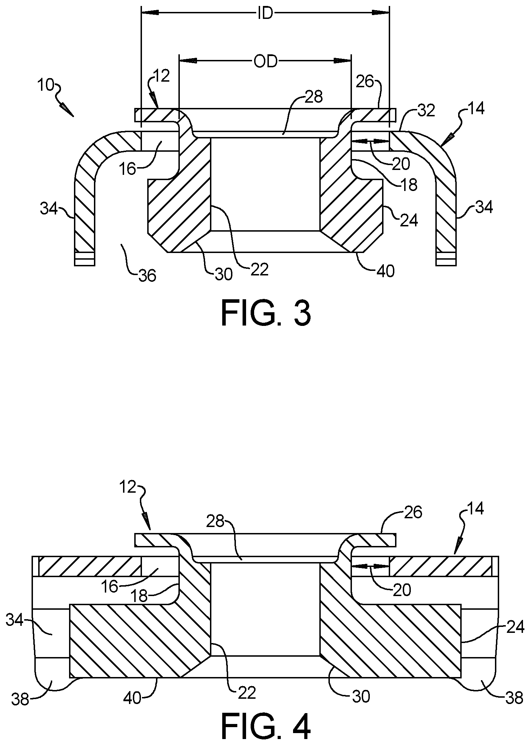

As shown in FIG. 3, the cage 14 defines a hole 16 having an inner diameter ID, and the nut 12 includes a cylindrical neck 18 having an outer diameter OD. The inner diameter ID of the hole 16 in the cage 14 is greater than the outer diameter OD of the nut 12, which yields a gap 20 between the nut 12 and the cage 14. The gap 20 allows the nut 12 to float relative to the cage 14 within a plane that is perpendicular to a longitudinal axis L of the hole 16. Thus, when the cage 14 is secured to an object, the cage nut assembly 10 compensates for misalignment between (i) a longitudinal axis of screw or bolt that is threaded into a cylindrical bore 22 in the nut 12 and (2) the longitudinal axis L of the hole 16 in the cage 14. The bore 22 may be threaded.

The nut 12 has a T-shaped cross section as shown in FIG. 4 and includes a base 24, the cylindrical neck 18, and an annular flange 26. The bore 22 of the nut 12 extends through the flange 26, the neck 18, and the base 24. The bore 22 has a first end 28 and a second end 30 opposite of the first end 28. In the example shown, the first and second ends 28 and 30 of the bore 22 are countersunk. The nut 12 can be made of a carbon steel such as SAE 10B21, SAE 10B22, or SAE 1035. In the example shown, the base 24 has a rectangular block shape.

The cage 14 includes a top plate 32, a pair of sidewalls 34 extending downward from opposite sides of the top plate 32, and the open bottom 36 extending between bottom edges of the sidewalls 34. Each sidewall 34 has a pair of feet 38 projecting downward from opposite longitudinal ends of the sidewall 34. The cage 14 can be made of a carbon steel such as SAE 1035 galvanized. The material(s) from which the nut 12 and the cage 14 are made is/are not limited to the examples listed above.

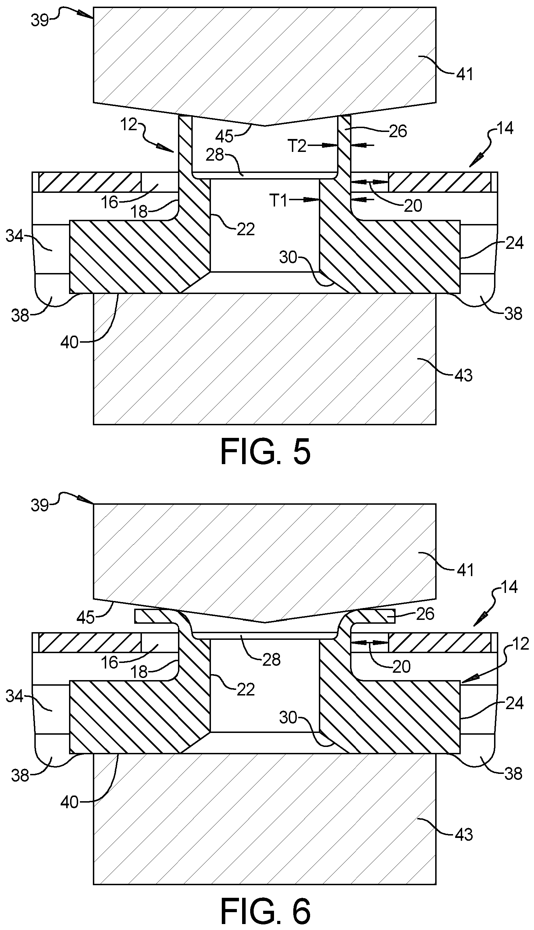

Briefly referring to FIGS. 5 and 6, when the nut 12 is initially formed, the flange 26 extends axially from an axial end from the neck 18 as shown (i.e., does not extend radially outward from the neck 18 as shown in FIGS. 1-4), and the neck 18 and the flange 26 collectively form a cylindrical body. In this state, the nut 12 is inserted through the hole 16 in the cage 14 so that the neck 18 is positioned within the hole 16 and the base 24 is positioned between the sidewalls 34 as shown in FIG. 5. The cylindrical body is then deformed in a punch tool 39 to form the annular flange 26 as shown, which retains the nut 12 in the cage 14 and forms the cage nut assembly 10. The annular flange 26 has the shape of a disk with a hole in its center. In other examples, the flange 26 may have a shape other than shown. For example, the flange 26 may include two half-disk shapes that are separated by a gap, or the flange 26 may include four (e.g., rectangular or arc-shaped) tabs that are folded or bent over. In the latter example, the neck 18 and the flange 26 may be made as a hex similar to a slotted crown nut with points or tabs spaced around the perimeter thereof, and then the tabs may be bent to extend radially outward instead of axially. In any of these examples, the flange 26 can provide the same function of retaining the nut 12 in the cage 14.

The punch tool 39 includes a roll over punch 41 and an anvil 43. The punch 41 is moved along the longitudinal axis L toward the nut 12 until a conical surface 45 on the punch 41 engages the flange 26 and rolls the flange 26 over (e.g., deforms the flange 26 radially outward). The anvil 43 supports the nut 12 as the punch 41 rolls the flange 26. The neck 18 has a thickness T1, and the flange 26 has a thickness T2 that is less than the thickness T1 of the neck 18 so that the neck 18 does not deform as the flange 26 is rolled over. The thickness T2 may be less than or equal to one-half of the thickness T1. The outer dimensions (e.g., outer diameter) of the annular flange 26 and the base 24 are larger than the inner diameter ID of the hole 16 so that the cage 14 is captured between the flange 26 and the base 24 after the flange 26 is rolled over.

Referring again to FIGS. 1 through 4, the open bottom 36 of the cage 14 allows for a bearing surface 40 on the base 24 of the nut 12 to contact an object to which the cage 14 is secured, such as a panel or frame of a vehicle. The cage 14 may be secured to the object by welding the cage 14 to the object using, for example, projection welding. The feet 38 may serve as welding nibs or energy concentrators during the welding. The top plate 32 of the cage 14 provides a closed surface 42 that enables improved fixturing for securing the cage 14 to the object as the feet 38 of the cage 14 are welded to the object.

Generally, the present disclosure relates to a cage nut assembly that includes a cage and a nut. The cage includes a plate having a hole, sidewalls extending from opposite sides of the plate, and an open bottom extending between bottom edges of the sidewalls. The nut includes a base, a neck, and a flange. The neck extends through the hole in the cage. The flange and the base of the nut capture the plate of the cage therebetween to secure the nut within the cage. A method of making such a cage nut assembly is also disclosed.

Some features of the illustrative examples are described in the following clauses. These clauses are examples of features not intended to limit other illustrative examples.

Clause 1. A cage nut assembly comprising:
a cage including a plate having a hole, sidewalls extending from opposite sides of the plate, and an open bottom extending between bottom edges of the sidewalls; and
a nut including a base, a neck, and a flange, the neck extending through the hole in the cage, the flange and the base of the nut capturing the plate of the cage therebetween to secure the nut within the cage.

Clause 2. The cage nut assembly of clause 1 wherein the neck is cylindrical and the flange is annular.

Clause 3. The cage nut assembly of clause 1 wherein the nut has a T-shaped cross section.

Clause 4. The cage nut assembly of clause 1 wherein the nut has a threaded bore that extends through the neck and the base.

Clause 5. The cage nut assembly of clause 4 wherein opposite ends of the threaded bore in the nut are countersunk.

Clause 6. The cage nut assembly of clause 1 wherein an inner diameter of the hole in the plate is greater than an outer diameter of the neck, yielding a gap between the nut and the cage.

Clause 7. The cage nut assembly of clause 1 wherein the neck has a first thickness, and the flange has a second thickness that is less than the first thickness of the neck.

Clause 8. The cage nut assembly of clause 1 wherein each of the sidewalls has a pair of feet projecting from opposite longitudinal ends thereof.

Clause 9. The cage nut assembly of clause 1 wherein the cage and the nut are made of carbon steel.

Clause 10. The cage nut assembly of clause 1 wherein the cage nut assembly consists of the cage and the nut.

Clause 11. A method of making a cage nut assembly, the method comprising:
inserting a flange of a nut through a hole in a plate of a cage; and
deforming the flange and thereby capturing the plate of the cage between the flange of the nut and a base of the nut.

Clause 12. The method of clause 11 further comprising:
supporting the nut using an anvil; and
deforming the flange using a punch.

Clause 13. The method of clause 11 wherein the cage includes a pair of sidewalls extending from opposite sides of the plate, the method further comprising positioning the base of the nut between the sidewalls of the cage when deforming the flange.

Clause 14. The method of clause 11 wherein deforming the flange includes rolling the flange over.

Clause 15. The method of clause 11 wherein the flange has a cylindrical shape before the flange is deformed, and the flange has the shape of a disk with a hole in its center after the flange is deformed.

Clause 16. The method of clause 11 further comprising securing the nut to the cage without deforming the cage or using adhesive.

Clause 17. The method of clause 11 wherein the nut includes a neck connecting the flange of the nut to the base of the nut, the method further comprising positioning the neck within the hole when deforming the flange.

Clause 18. The method of clause 17 wherein the neck has a cylindrical shape, and deforming the flange includes bending the flange radially outward without deforming the neck.

Clause 19. The method of clause 17 wherein the neck is cylindrical and, before the flange is deformed, the flange extends axially from an axial end of the neck so that the neck and the flange collectively form a cylindrical body, and after the flange is deformed, the flange extends radially outward from the cylindrical neck and has an annular shape.

Clause 20. The method of clause 17 further comprising forming the neck to have a first thickness and forming the flange to have a second thickness that is less than the first thickness.

The foregoing description is merely illustrative in nature and is in no way intended to limit the disclosure, its application, or uses. The broad teachings of the disclosure can be implemented in a variety of forms. Therefore, while this disclosure includes particular examples, the true scope of the disclosure should not be so limited since other modifications will become apparent upon a study of the drawings, the specification, and the following claims. It should be understood that one or more steps within a method may be executed in different order (or concurrently) without altering the principles of the present disclosure. Further, although each of the embodiments is described above as having certain features, any one or more of those features described with respect to any embodiment of the disclosure can be implemented in and/or combined with features of any of the other embodiments, even if that combination is not explicitly described. In other words, the described embodiments are not mutually exclusive, and permutations of one or more embodiments with one another remain within the scope of this disclosure.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.).

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

As used herein, the term "and/or" includes any and all combinations of one or more of the associated listed items. As used herein, the phrase at least one of A, B, and C should be construed to mean a logical (A OR B OR C), using a non-exclusive logical OR, and should not be construed to mean "at least one of A, at least one of B, and at least one of C."

## Claims

1. A cage nut assembly comprising:
a cage including a plate having a hole, sidewalls extending from opposite sides of the plate, and an open bottom extending between bottom edges of the sidewalls; and
a nut including a base, a neck, and a flange, the neck extending through the hole in the cage, the flange and the base of the nut capturing the plate of the cage therebetween to secure the nut within the cage.

2. The cage nut assembly of claim 1, wherein the neck is cylindrical and the flange is annular.

3. The cage nut assembly of claim 1 or 2, wherein the nut has a T-shaped cross section.

4. The cage nut assembly of any one of claims 1-3, wherein the nut has a threaded bore that extends through the neck and the base.

5. The cage nut assembly of claim 4, wherein opposite ends of the threaded bore in the nut are countersunk.

6. The cage nut assembly of any one of claims 1-5, wherein an inner diameter of the hole in the plate is greater than an outer diameter of the neck, yielding a gap between the nut and the cage.

7. The cage nut assembly of any one of claims 1-6, wherein the neck has a first thickness, and the flange has a second thickness that is less than the first thickness of the neck.

8. The cage nut assembly of any one of claims 1-7, wherein each of the sidewalls has a pair of feet projecting from opposite longitudinal ends thereof.

9. The cage nut assembly of any one of claim 1-8, wherein the cage and the nut are made of carbon steel.

10. The cage nut assembly of any one of claims 1-9, wherein the cage nut assembly consists of the cage and the nut.

11. A method of making a cage nut assembly, the method comprising:
inserting a flange of a nut through a hole in a plate of a cage; and
deforming the flange and thereby capturing the plate of the cage between the flange of the nut and a base of the nut.

12. The method of claim 11,
further comprising supporting the nut using an anvil, and deforming the flange using a punch; and/or
wherein the cage includes a pair of sidewalls extending from opposite sides of the plate, the method further comprising positioning the base of the nut between the sidewalls of the cage when deforming the flange; and/or
wherein deforming the flange includes rolling the flange over; and/or
wherein the flange has a cylindrical shape before the flange is deformed, and the flange has the shape of a disk with a hole in its center after the flange is deformed; and/or
further comprising securing the nut to the cage without deforming the cage or using adhesive.

13. The method of claim 11 or 12, wherein the nut includes a neck connecting the flange of the nut to the base of the nut, the method further comprising positioning the neck within the hole when deforming the flange.

14. The method of claim 13, wherein the neck has a cylindrical shape, and deforming the flange includes bending the flange radially outward without deforming the neck.

15. The method of claim 13 or 14,
wherein the neck is cylindrical and, before the flange is deformed, the flange extends axially from an axial end of the neck so that the neck and the flange collectively form a cylindrical body, and after the flange is deformed, the flange extends radially outward from the cylindrical neck and has an annular shape; and/or
further comprising forming the neck to have a first thickness and forming the flange to have a second thickness that is less than the first thickness.
